# EUROPEAN PATENT SPECIFICATION

(11) **EP 0 605 056 B1**
(45) Date of publication and mention of the grant of the patent: **07.10.1998**
(21) Application number: 93203692.4
(22) Date of filing: 24.12.1993
(51) Int. Cl.: G11B 5/53, G11B 15/61

(54) **Magnetic-tape apparatus and magnetic-head unit suitable for use in the magnetic-tape apparatus**
Magnetbandgerät und Magnetkopfeinheit geeignet zum Gebrauch in dem Gerät
Appareil à bande magnétique et unité à tête magnétique convenant pour l'utilisation dans l'appareil

(30) Priority: 29.12.1992 EP 92204105
(43) Date of publication of application: 06.07.1994
(73) Proprietor: Koninklijke Philips Electronics N.V., 5621 BA Eindhoven (NL)
(72) Inventor: Smit, Casper Maria, c/o Internationaal Octrooibur., NL-5656 AA Eindhoven (NL); Peters, Cornelis, c/o Internationaal Octrooibur., NL-5656 AA Eindhoven (NL)
(74) Representative: Cuppens, Hubertus Martinus Maria

(56) References cited:
- JP-A- 4 291 013
- PATENT ABSTRACTS OF JAPAN vol. 9, no. 97 (P-352) (1820) 26 April 1985 & JP-A-59 223 928 (MITSUBISHI DENKI K. K.) 15 December 1984
- PATENT ABSTRACTS OF JAPAN vol. 1, no. 153 (E-72) 8 December 1977 & JP-A-52 094 114 (MATSUSHITA DENKI SANGYO K.K.) 8 August 1977
- PATENT ABSTRACTS OF JAPAN vol. 9, no. 90 (P-350) (1813) 19 April 1985 & JP-A-59 218 624 (MATSUSHITA DENKI SANGYO K.K.) 8 December 1984
- PATENT ABSTRACTS OF JAPAN vol. 8, no. 248 (P-313) (1685) 14 November 1984 & JP-A-59 119 523 (HITACHI SEISAKUSHO K. K.) 10 July 1984

## Description

The invention relates to a magnetic-tape apparatus comprising tape-transport means for the transport of a magnetic tape in the longitudinal direction, and a magnetic-head unit comprising a tape-guide wall and a plurality of magnetic heads which are rotatable in a direction of rotation and which each have a head face, which magnetic heads projects from the tape-guide wall, the head face being spaced from the tape-guide wall and having a leading flank for which the distance between the tape-guide wall and the head face increases viewed in a direction opposite to the direction of rotation, and having a trailing flank for which the distance between the tape-guide wall and the head face decreases viewed in a direction opposite to the direction of rotation, which magnetic heads further have a transducing gap for reading and writing information on a magnetic tape, which transducing gaps extend in the head faces.

A magnetic-head unit for use in a magnetic-tape apparatus of the type defined in the opening paragraph is known from DE 4110589 A1. A magnetic-tape apparatus of the type defined in the opening paragraph is used for making professional recordings in studios. The information is then digitally recorded on the magnetic tape. The picture quality of such a magnetic-tape apparatus should comply with strict requirements. In order to obtain a high picture quality such a magnetic-tape apparatus should be capable of recording 1.2 gigabits per second. For this purpose such a magnetic-tape apparatus may be provided with the known magnetic-head unit, which comprises 16 signal transmission channels having one magnetic head each. To record 1.2 gigabits per second this requires a head-tape speed of 45 m/s. In the known magnetic-head unit the transducing gap is situated at the location of the transition between the leading flank and the trailing flank, *i.e.* at the crest of the head face. The high head-tape speeds prevailing in such professional magnetic-tape apparatuses give rise to vibrations in the magnetic tape immediately before and after the magnetic head. The undulations produced in the magnetic tape as a result of these vibrations disturb the arc-shape of the magnetic tape at the location of the magnetic head. This results in a diminished head-tape contact at the location of the transducing gap, which gives rise to loss of signal and a lower picture quality. A known solution for this is to increase the tension in the magnetic tape. As a result of this, the magnetic tape is drawn against the magnetic head, which improves the head-tape contact. A drawback is that it also leads to increased wear and, consequently, the life of the magnetic heads is reduced.

It is an object of the invention to provide a magnetic-tape apparatus of the type defined in the opening paragraph, which provides a good picture quality whilst the life of the magnetic heads is longer than that in magnetic-tape apparatuses comprising the known magnetic-head unit. To this end the magnetic-tape apparatus in accordance with the invention is characterized in that in each magnetic head the transducing gap extends in the head face at the location of the leading flank. Tests have shown that the undulations produced in the magnetic tape cause the magnetic tape to disengage from the magnetic head so that the trailing flank of the head face is no longer in contact with the head face, whereas the leading flank of the head face remains at least substantially in contact with the magnetic tape. If the transducing gap is situated at the bounding line between the leading flank and the trailing flank of head face said disengagement of the magnetic tape from the magnetic head has an adverse effect on the head-tape contact at the location of the transducing gap. It has also been found that as the tension in the magnetic tape increases the magnetic tape, as envisaged, is less apt to become disengaged from the magnetic head but, moreover, that the head-tape contact at the location of the leading flank of the head face changes only to a small extent. By arranging the transducing gap in the head face at the location of the leading flank the head-tape contact at the location of the transducing gap is better than in the known magnetic-head unit, which yields a reduced loss of signal during writing and an improved picture quality during reading. Since the magnitude of the tension in the magnetic tape has little influence on the head-tape contact at the location of the leading flank of the head face the tension in the magnetic tape can be reduced without detriment to the picture quality, resulting in a reduced wear and an extended life.

One possibility of obtaining the transducing gap at the location of the leading flank in the head face is to arrange the transducing gap asymmetrically in the magnetic head. To this end an embodiment of a magnetic-tape apparatus in accordance with the invention, in which the head face has a centre, the magnetic head is rotatable about a centre of rotation and has a central axis which extends through the centre of the head face, and the central axis extends parallel to a line through the centre of rotation and through the centre of the head face, is characterized in that the transducing gap is spaced from the centre of the head face.

Another possibility of obtaining the transducing gap at the location of the leading flank in the head face is to arrange the transducing gap in the middle of the magnetic head and to tilt the magnetic head in the direction of rotation. To this end a further embodiment of a magnetic-tape apparatus in accordance with the invention, in which the head face has a centre, the magnetic head is rotatable about a centre of rotation, and has a central axis which extends through the centre of the head face, is characterized in that the central axis intersects a line through the centre of rotation and through the centre of the head face, and the transducing gap is situated at least substantially in the centre of the head face.

A further embodiment of a magnetic-tape apparatus in accordance with the invention, in which the head face has a crest where the distance between the tape-guide wall and the head face is maximal and in which, viewed in the direction of rotation, the head face has a length, is characterized in that the transducing gap is situated in the head face at a distance of at least one eighth of the length of the head face from the crest. It has been found that as a result of said undulations in the magnetic tape the magnetic tape becomes disengaged not only at the location of the trailing flank of the head face but sometimes also at the location of a portion of the leading flank of the head face which adjoins the trailing flank of the head face, whereas the magnetic head remains in contact with the magnetic tape at the location of the remainder of the leading flank of the head face. Arranging the transducing gap in the head face at a distance from the crest which is at least one eighth of the length of the head face also reduces the risk of a deterioration of the head-tape contact at the location of the transducing gap under other circumstances.

The invention also relates to a magnetic-head unit suitable for use in a magnetic-tape apparatus in accordance with the invention.

These and other aspects of the invention will be apparent from and elucidated with reference to the embodiments described hereinafter.

The invention will now be described in more detail, by way of example, with reference to the drawings. In the drawings:
Figure 1 shows diagrammatically the interior of a magnetic-tape apparatus,
Figure 2 is a sectional view of a magnetic-head unit in accordance with the invention,
Figure 3 shows a segment of a rotatable disc carrying magnetic heads in a first embodiment of the magnetic-tape apparatus in accordance with the invention,
Figure 4 represents the head-tape contact for different tape tensions,
Figure 5 shows a segment of a rotatable disc carrying magnetic heads in a second embodiment of the magnetic-tape apparatus in accordance with the invention,
Figure 6 represents the head-tape contact in the first embodiment, and
Figure 7 represents the head-tape contact in the second embodiment.

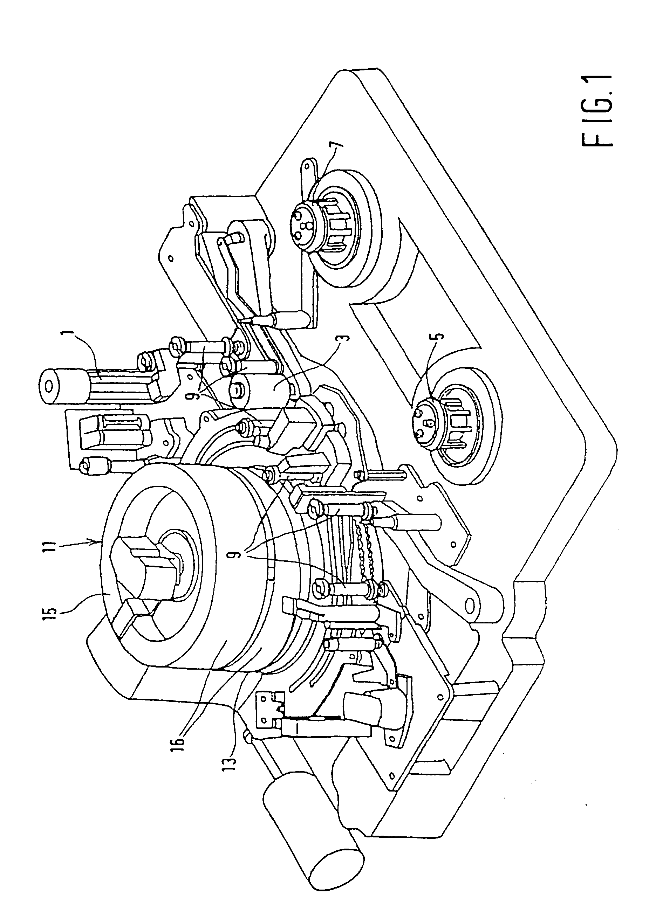

Figure 1 shows the interior of a magnetic-tape apparatus suitable for professional recording. The magnetic-tape apparatus is intended for cooperation with a cassette provided with a magnetic tape wound on two reels. However, the magnetic-tape apparatus may also cooperate with a magnetic tape wound on reels which are not accommodated in a cassette. The magnetic-tape apparatus has tape-transport means for the transport of the magnetic tape in the longitudinal direction. These tape-transport means comprise a capstan 1 and a tape-pressure roller 3, which presses the magnetic tape against the capstan. The magnetic-tape apparatus further has two reel-drive spindles 5, 7 for taking up magnetic tape on and unwinding it from reels, and tape guides 9 for guiding magnetic tape from reels and to a magnetic-head unit 11 of the magnetic-tape apparatus. The magnetic-head unit has a stationary lower and upper drum 13, 15, which drums define a tape-guide wall 16 for guiding a magnetic tape past the magnetic-head unit 11.

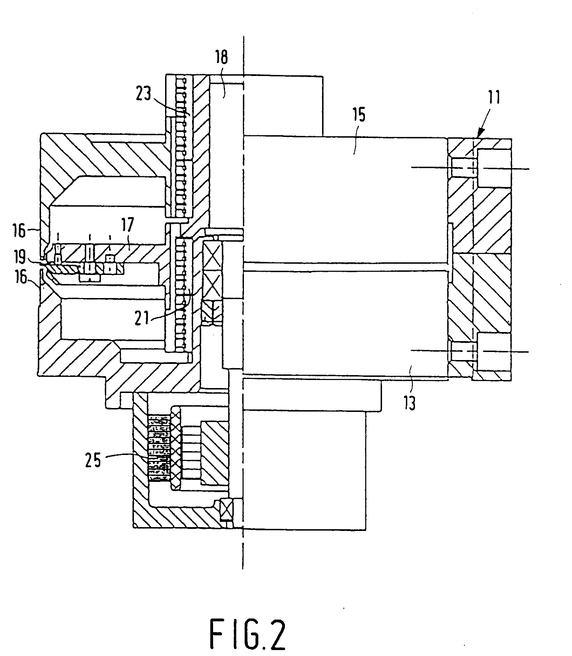

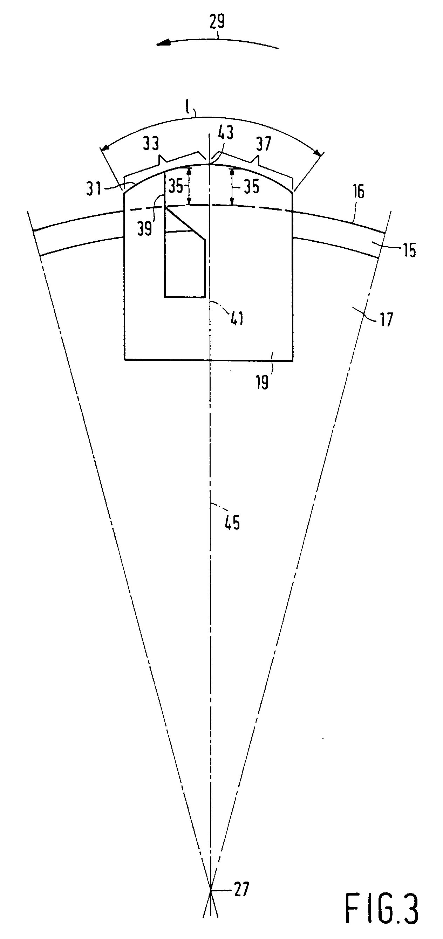

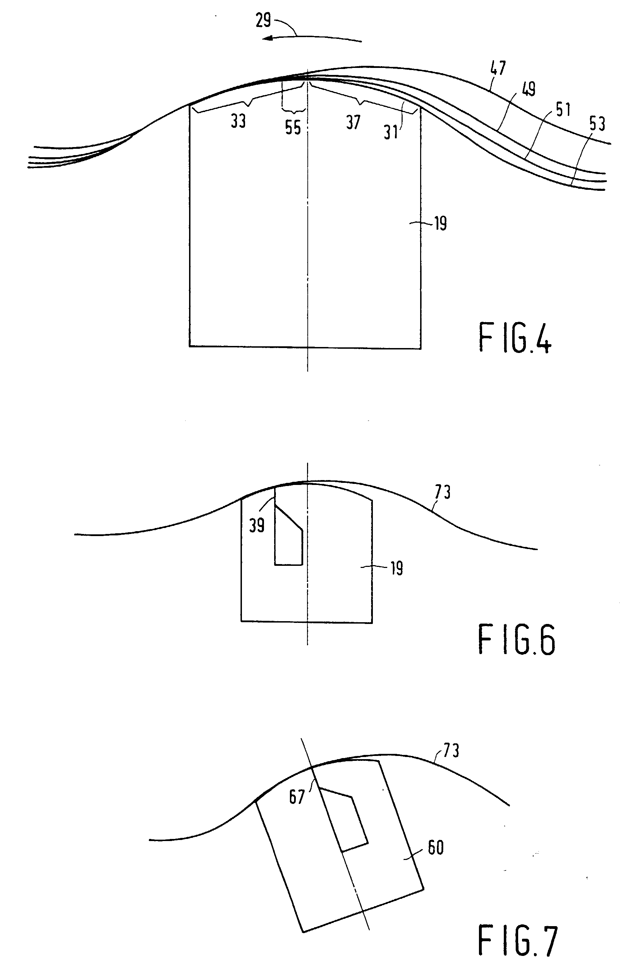

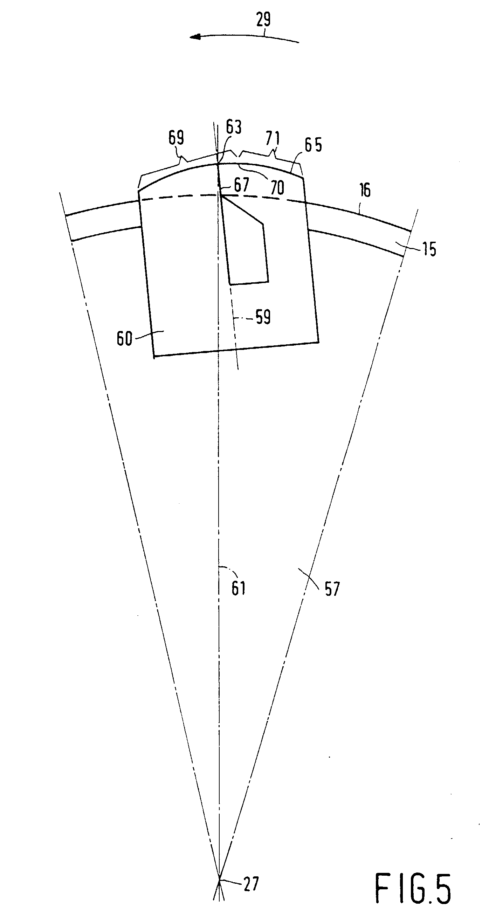

Figure 2 shows the magnetic-head unit 11 of the magnetic-tape apparatus. A rotatable disc 17, which is mounted on a rotatable shaft 18, is disposed between the stationary upper and lower drum 13, 15. The disc 17 carries magnetic heads 19. Transformers 21, 23 are arranged on the shaft 18 of the disc 17 and in the two drums 13, 15 to transmit the information to be recorded to the magnetic heads or to transmit the information read by the magnetic heads to the stationary drums 13, 15. The lower drum 13 accommodates an electric motor 25 to rotate the shaft 18 carrying the disc 17. The magnetic heads 19 are rotatable about a centre of rotation 27 in a direction of rotation 29, see Figure 3. Each magnetic head 19 has a head face 31 having a leading flank 33, for which the distance 35 between the tape-guide wall 16 and the head face 31 increases viewed in a direction opposite to the direction of rotation 29, and a trailing flank 37, for which the distance 35 between the tape-guide wall 16 and the head face 31 decreases viewed in a direction opposite to the direction of rotation 29. In the head face 31 the magnetic head 19 has a transducing gap 39 for reading and writing information on a magnetic tape. Viewed in the direction of rotation 29 the head face 31 has a length 1. The magnetic head 19 further has a central axis 41 which extends through the centre 43 of the head face 31. The segment of the disc 17 carrying the magnetic heads, shown in Figure 3, forms part of a first embodiment of the magnetic-head unit 11 and the magnetic-tape apparatus in accordance with the invention. In this embodiment the central axis 41 extends parallel to a line 45 through the centre of rotation 27 and the centre 43 of the head face 31. At the location of the transition between the leading flank and the trailing flank 33, 37 the head face 31 has a crest, which in the present embodiment coincides with the centre of the head face 31. In this first embodiment the transducing gap 39 extends in the head face 31 at the location of the leading flank 33 and is spaced from the crest of the head face 31, preferably at a distance of at least one eighth of the length 1 of the head face 31 from the crest, see also Figure 6.

Figure 4 shows different arc shapes of a magnetic tape at the location of a magnetic head 19 for different tensions in the magnetic tape. The reference numeral 47 represents the arc shape of the magnetic tape in the case of a tension of 0.10 N in the longitudinal direction of the magnetic tape. The numerals 49, 51 and 53 refer to the arc shapes of the magnetic tape when the tension in the magnetic tape has increased to 0.5 N, 0.6 N and 0.7 N, respectively. This shows that the magnetic tape becomes further disengaged from the head face 31 of the magnetic head 19 as the tension in the magnetic tape decreases. It is also apparent that at the location of the leading flank 33 of the head face 31 the magnetic tape is in contact with the head face 31 of the magnetic head 19 regardless of the tension in the magnetic tape. For the smallest value of the tension in the magnetic tape it appears that the magnetic tape is also clear of a part 55 of the head face of the magnetic head 19, which part is situated at the location of the leading flank 33 and adjoins the trailing flank 37. If the transducing gap is situated at the location of the remainder of the leading flank 33 of the head face 31 the magnitude of the tension in the magnetic tape will be irrelevant for the head-tape contact. In order to minimize the wear of the magnetic head the smallest tape tension may be chosen.

Figure 5 shows a segment of a disc 57 of a second embodiment of the magnetic-head unit and the magnetic-tape apparatus in accordance with the invention. The central axis 59 of the magnetic head 60 is now inclined relative to a line 61 through the centre 63 of the head face 65 and the centre of rotation 27 and intersects this line 61. In this second embodiment the transducing gap 67 is situated in the centre 63 of the head face 65, see also Figure 7. Since the magnetic head 60 has been tilted the leading flank 69 of the head face 65 forms the larger part of the head face 65 and the trailing flank 71 forms the smaller part of the head face 65 in the present situation. In this case the crest 70 of the head face 65 is not situated in the centre 63 of the head face 65 but, viewed in the Figure, to the right of this centre. Again the transducing gap 67 extends in the head face 65 at the location of the leading flank 69 and is preferably spaced from the crest 70 at a distance of at least one eighth of the length of the head face 65.

Figures 6 and 7 illustrate the cooperation between the magnetic tape 73 and the magnetic head 19, 60 in the first embodiment and the second embodiment, respectively, in the case of a tension of 0.40 N in the magnetic tape. The Figures clearly show that a satisfactory contact is obtained between the magnetic tape 73 and the magnetic head 19, 60 at the location of the transducing gap 39, 67.

Although the invention has been described with reference to the drawings this does not imply that the invention is limited to the embodiments shown in the drawings. The invention likewise relates to all embodiments which deviate from those shown in the drawings within the scope defined by the Claims.

## Claims

1. A magnetic-tape apparatus comprising tape-transport means (5, 7) for the transport of a magnetic tape (73) in the longitudinal direction, and a magnetic-head unit (11) comprising a tape-guide wall (16) and a plurality of magnetic heads (19) which are rotatable in a direction of rotation (29) and which each have a head face (31), which magnetic heads project from the tape-guide wall, the head faces being spaced from the tape-guide wall and having a leading flank (33) for which the distance between the tape-guide wall and the head face increased viewed in a direction opposite to the direction of rotation, and having a trailing flank (37) for which the distance between the tape-guide wall and the head face decreases viewed in a direction opposite to the direction of rotation, which magnetic heads further have a transducing gap (39) for reading and writing information on a magnetic tape, which transducing gaps extend in the head faces, characterized in that in each magnetic head (19) the transducing gap (39) extends in the head face (31) at the location of the leading flank (33).

2. A magnetic-tape apparatus as claimed in Claim 1, in which each head face (31) has a centre (43), magnetic head are rotatable about a centre of rotation (27) and has a central axis (41) which extends through the centre of the head face, and the central axis extends parallel to a line through the centre of rotation and through the centre of the head face, characterized in that the transducing gap (39) is spaced from the centre (43) of the head face (31).

3. A magnetic-tape apparatus as claimed in Claim 1, in which each head face (65) has a centre (63), the magnetic heads are rotatable about a centre of rotation (27), and have a central axis (61) which extends through the centre of the head face, characterized in that the central axis (63) intersects a line through the centre of rotation and through the centre of the head face, and the transducing gap (67) is situated at least substantially in the centre (63) of the head face (65).

4. A magnetic-tape apparatus as claimed in Claim 1, 2 or 3, in which the head face (65) has a crest (70) where the distance between the tape-guide wall (16) and the head face (65) is maximal and in which, viewed in the direction of rotation (29), the head face has a length, characterized in that the transducing gap is situated in the head face at a distance of at least one eighth of the length of the head face (65) from the crest (63).

5. A magnetic-head unit (11) comprising a tape-guide wall (16) and a plurality of magnetic heads (19) which are rotatable in a direction of rotation (29) and which each have a head face (31), which magnetic heads project from the tape-guide wall, the head faces being spaced from the tape-guide wall and having a leading flank (33) for which the distance between the tape-guide wall and the head face increases viewed in a direction opposite to the direction of rotation, and having a trailing flank (37) for which the distance between the tape-guide wall and the head face decreases viewed in a direction opposite to the direction of rotation, which magnetic heads further have a transducing gap (39) for reading and writing information on a magnetic tape, which transducing gaps extend in the head faces, characterized in that in each magnetic head (19) the transducing gap (39) extends in the head face (31) at the location of the leading flank (33).

6. A magnetic-head unit (11) as claimed in Claim 5, in which each head face (31) has a centre (43), the magnetic head are rotatable about a centre of rotation (27) and has a central axis (41) which extends through the centre of the head face, and the central axis extends parallel to a line through the centre of rotation and through the centre of the head face, characterized in that the transducing gap (39) is spaced from the centre (43) of the head face (31).

7. A magnetic-head unit (11) as claimed in Claim 5, in which each head face (65) has a centre (63), the magnetic heads are rotatable about a centre of rotation (27), and have a central axis (61) which extends through the centre of the head face, characterized in that the central axis (63) intersects a line through the centre of rotation and through the centre of the head face, and the transducing gap (67) is situated at least substantially in the centre (63) of the head face (65).

8. A magnetic-head unit (11) as claimed in Claim 5, 6 or 7, in which the head face (65) has a crest (70) where the distance between the tape-guide wall (16) and the head face (65) is maximal and in which, viewed in the direction of rotation (29), the head face has a length, characterized in that the transducing gap is situated in the head face at a distance of at least one eighth of the length of the head face (65) from the crest (63).

## Patentansprüche

1. Magnetbandgerät mit Bandtransportmitteln (5, 7) zum in der Längsrichtung Transportieren eines Magnetbandes (73) und mit einer Magnetkopfeinheit (11) mit einer Bandführungswand (16) und einer Anzahl in einer Drehrichtung drehbarer Magnetköpfe (19) mit je einer Kopffläche (31), wobei diese Magnetköpfe aus der Bandführungswand herausragen, wobei die Kopffläche sich in einem Abstand von der Bandführungswand befindet und eine ansteigende Flanke (23) hat, wobei der Abstand zwischen der Bandführungswand und der Kopffläche in einer Richtung entgegengesetzt zu der Drehrichtung gesehen, zunimmt und eine abfallende Flanke (27) hat, wobei der Abstand zwischen der Bandführungswand und der Kopffläche in einer Richtung entgegengesetzt zu der Drehrichtung gesehen, abnimmt, wobei die Magnetköpfe weiterhin mit je einem Übertragungsspalt (29) versehen sind zum Lesen und Schreiben von Information auf Magnetband, wobei diese Übertragungsspalte sich in den Kopfflächen erstrecken, dadurch gekennzeichnet, daß in jedem Magnetkopf(19) der Übertragungsspalt (39) sich an der Stelle der ansteigenden Flanke (33) in der Kopffläche (31) erstreckt.

2. Magnetbandgerät nach Anspruch 1, wobei jede Kopffläche (31) eine Mitte (43) hat, der Magnetkopf um einen Drehpunkt (27) drehbar ist und eine Mittellinie (41) hat, die durch die Mitte der Kopffläche geht und die Mittellinie sich parallel zu einer Linie durch den Drehpunkt und durch die Mitte der Kopffläche erstreckt, dadurch gekennzeichnet, daß der Übertragungsspalt (39) sich in einem Abstand von der Mitte (43) der Kopffläche (31) befindet.

3. Magnetbandgerät nach Anspruch 1, wobei jede Kopffläche (65) eine Mitte (63) hat, der Magnetkopf um einen Drehpunkt (27) drehbar ist und eine Mittellinie (61) hat, die durch die Mitte der Kopffläche geht, dadurch gekennzeichnet, daß die Mittellinie (63) eine Linie durch den Drehpunkt und durch die Mitte der Kopffläche schneidet und der Übertragungsspalt (67) sich wenigstens nahezu in der Mitte (63) der Kopffläche (65) befindet.

4. Magnetbandgerät nach Anspruch 1, 2 oder 3, wobei die Kopffläche (65) einen Scheitelpunkt (70) hat, wo der Abstand zwischen der Bandführungswand (16) und der Kopffläche (65) maximal ist und wobei die Kopffläche, in der Drehrichtung (29) gesehen, eine Länge hat, mit dem Kennzeichen, daß der Übertragungsspalt in einem Abstand, entsprechend wenigstens einem Achtel der Länge der Kopffläche (65), von dem Scheitelpunkt (63) in der Kopffläche vorhanden ist.

5. Magnetkopfeinheit (11) mit einer Bandführungswand (16) und einer Anzahl in einer Drehrichtung (29) drehbarer Magnetköpfe (19) mit je einer Kopffläche (31), wobei diese Magnetköpfe aus der Bandführungswand herausragen, wobei die Kopffläche sich in einem Abstand von der Bandführungswand befindet und eine ansteigende Flanke (33) hat, wobei der Abstand zwischen der Bandführungswand und der Kopffläche in einer Richtung entgegengesetzt zu der Drehrichtung gesehen, zunimmt und eine abfallende Flanke (27) hat, wobei der Abstand zwischen der Bandführungswand und der Kopffläche in einer Richtung entgegengesetzt zu der Drehrichtung gesehen, abnimmt, wobei die Magnetköpfe weiterhin mit je einem übertragungsspalt (29) versehen sind zum Lesen und Schreiben von Information auf Magnetband, wobei diese Übertragungsspalte sich in den Kopfflächen erstrecken, dadurch gekennzeichnet, daß in jedem Magnetkopf (19) der Übertragungsspalt (39) sich an der Stelle der ansteigenden Flanke (33) in der Kopffläche (31) erstreckt.

6. Magnetkopfeinheit (11) nach Anspruch 5, wobei jede Kopffläche (31) eine Mitte (43) hat, der Magnetkopf um einen Drehpunkt (27) drehbar ist und eine Mittellinie (41) hat, die durch die Mitte der Kopffläche geht und die Mittellinie sich parallel zu einer Linie durch den Drehpunkt und durch die Mitte der Kopffläche erstreckt, dadurch gekennzeichnet, daß der Übertragungsspalt (39) sich in einem Abstand von der Mitte (43) der Kopffläche (31) befindet.

7. Magnetkopfeinheit (11) nach Anspruch 5, wobei jede Kopffläche (65) eine Mitte (63) hat, der Magnetkopf um einen Drehpunkt (27) drehbar ist und eine Mittellinie (61) hat, die durch die Mitte der Kopffläche geht, dadurch gekennzeichnet, daß die Mittellinie (63) eine Linie durch den Drehpunkt und durch die Mitte der Kopffläche schneidet und der Übertragungsspalt (67) sich wenigstens nahezu in der Mitte (63) der Kopffläche (65) befindet.

8. Magnetkopfeinheit (11) nach Anspruch 5, 6 oder 7, wobei die Kopffläche (65) einen Scheitelpunkt (70) hat, wo der Abstand zwischen der Bandführungswand (16) und der Kopffläche (65) maximal ist und wobei die Kopffläche, in der Drehrichtung (29) gesehen, eine Länge hat, mit dem Kennzeichen, daß der Übertragungsspalt in einem Abstand, entsprechend wenigstens einem Achtel der Länge der Kopffläche (65), von dem Scheitelpunkt (63) in der Kopffläche vorhanden ist.

## Revendications

1. Appareil à bande magnétique comprenant des moyens d'entraînement de bande (5,7) pour l'entraînement d'une bande magnétique (73) dans la direction longitudinale, et une unité de têtes magnétiques (11) comprenant une paroi de guide-bande (16) et une pluralité de têtes magnétiques (19) qui peuvent tourner dans une direction de rotation (29) et qui comportent chacune une face principale (31), lesquelles têtes magnétiques font saillie depuis la paroi de guide-bande, les faces principales étant espacées de la paroi de guide-bande et comportant un flanc avant (33) pour lequel la distance entre la paroi de guide-bande et la face principale va en augmentant, vue dans une direction opposée à la direction de rotation, et comportant un flanc arrière (27) pour lequel la distance entre la paroi de guide-bande et la face principale va en diminuant, vue dans une direction opposée à la direction de rotation, lesquelles têtes magnétiques comprennent en outre un entrefer transducteur (29) pour lire et écrire des informations sur une bande magnétique, lesquels entrefers transducteurs s'étendent dans les faces principales, caractérisé en ce que, dans chaque tête magnétique (19), l'entrefer transducteur (39) s'étend dans la face principale (31) à l'endroit du flanc avant (33).

2. Appareil à bande magnétique suivant la revendication 1, dans lequel chaque face principale (31) présente un centre (43), les têtes magnétiques peuvent tourner autour d'un centre de rotation (27) et comportent un axe central (41) qui pase par le centre de la face principale, et l'axe central s'étend parallèlement à une ligne passant par le centre de rotation et par le centre de la face principale, caractérisé en ce que l'entrefer transducteur (39) est espacé du centre (43) de la face principale (31).

3. Appareil à bande magnétique suivant la revendication 1, dans lequel chaque face principale (65) présente un centre (63), les têtes magnétiques peuvent tourner autour d'un centre de rotation (27), et comportent un axe central (61) qui passe par le centre de la face principale, caractérisé en ce que l'axe central (63) coupe une ligne passant par le centre de rotation et par le centre de la face principale, et l'entrefer transducteur (67) se trouve au moins pratiquement au centre (63) de la face principale (65).

4. Appareil à bande magnétique suivant la revendication 1, 2 ou 3, dans lequel la face principale (65) présente une crête (70), où la distance entre la paroi de guide-bande (16) et la face principale (65) est maximale, et dans lequel, vue dans la direction de rotation (29), la face principale a une certaine longueur, caractérisé en ce que l'entrefer transducteur se trouve dans la face principale à une distance de la crête (63) d'au moins un huitième de la longueur de la face principale (65).

5. Unité de têtes magnétiques (11) comprenant une paroi de guide-bande (16) et une pluralité de têtes magnétiques (19) qui peuvent tourner dans une direction de rotation (29) et qui comporte chacune une face principale (31), lesquelles têtes magnétiques font saillie de la paroi de guide-bande, les faces principales étant décalées de la paroi de guide-bande et ayant un flanc avant (33) pour lequel la distance entre la paroi de guide-bande et la face principale va en augmentant dans une direction opposée à la direction de rotation, et ayant un flanc arrière (37) pour lequel la distance entre la paroi de guide-bande et la face principale va en diminuant, vue dans une direction opposée à la direction de rotation, lesquelles têtes magnétiques comprennent en outre un entrefer transducteur (39) pour lire et écrire des informations sur une bande magnétique, lesquels entrefers transducteurs s'étendent dans les faces principales, caractérisée en ce que, dans chaque tête magnétique (19), l'entrefer transducteur (39) s'étend dans la face principale (31) à l'endroit du flanc avant (33).

6. Unité de têtes magnétiques (11) suivant la revendication 5, dans laquelle chaque face principale (31) présente un centre (43), les têtes magnétiques peuvent tourner autour d'un centre de rotation (27) et comportent un axe central (41) qui s'étend à travers le centre de la face principale, et l'axe central s'étend parallèlement à une ligne passant par le centre de rotation et par le centre de la face principale, caractérisée en ce que l'entrefer transducteur (39) est décalé du centre (43) de la face principale (31).

7. Unité de têtes magnétiques (11) suivant la revendication 5, dans laquelle chaque face principale (65) comporte un centre (63), les têtes magnétiques peuvent tourner autour d'un centre de rotation (27), et comportent un axe central (61) qui passe par le centre de la face principale, caractérisée en ce que l'axe central (63) coupe une ligne passant par le centre de rotation et par le centre de la tête, et l'entrefer transducteur (67) se trouve au moins pratiquement au centre (63) de la face principale (65).

8. Unité de têtes magnétiques (11) suivant la revendication 5, 6 ou 7, dans laquelle la face principale (65) présente une crête (70) où la distance entre la paroi de guide-bande (16) et la face principale (65) est maximale et dans laquelle, vue dans la direction de rotation (29), la face principale a une certaine longueur, caractérisée en ce que l'entrefer transducteur se trouve dans la face principale à une distance de la crête (63) d'au moins un huitième de la longueur de la face principale (65).
